Europäisches Patentamt

European Patent Office

Office européen des brevets

(11) Numéro de publication : **0 315 523 B1**

(12) **FASCICULE DE BREVET EUROPEEN**

(45) Date de publication du fascicule du brevet :
**13.05.92 Bulletin 92/20**

(51) Int. Cl.[5] : **C25D 5/36,** C25D 3/46,
F16C 33/30, C25D 5/48

(21) Numéro de dépôt : **88402748.3**

(22) Date de dépôt : **03.11.88**

(54) **Procédé électrolytique d'argentage en couche mince et application à des chemins de roulement.**

(30) Priorité : **05.11.87 FR 8715338**

(43) Date de publication de la demande :
**10.05.89 Bulletin 89/19**

(45) Mention de la délivrance du brevet :
**13.05.92 Bulletin 92/20**

(84) Etats contractants désignés :
**DE FR GB IT SE**

(56) Documents cités :
**DE-C- 937 211**
**FR-A- 1 442 506**
**CHEMICAL ABSTRACTS, vol. 102, no. 24, 17 juin 1985, page 514, résumé no. 211592g, Columbus, Ohio, US; & JP-A 59 140 388(FURU-KAWA ELECTRIC CO., LTD) 11-08-1984**

(56) Documents cités :
**CHEMICAL ABSTRACTS, vol. 97, no. 18, 1 novembre 1982, page 567, résumé no. 153020j, Columbus, Ohio, US; C.Y. WU: "Silverelectroplating on stainless steel", & CHIN SHU PIAO MIEN CHI SHU TSA CHIH 1981, 71, 38-9**
**METAL FINISHING, vol. 48, no. 5, mai 1986, pages 35-38, Hackensack, New York, US; J.B. MOHLER et al.: "Finishing pointer"**

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Martinou, Robert Lucien**
**47, avenue du Général Leclerc**
**F-94360 Bry sur Marne (FR)**
Inventeur : **Ruimi, Michel Meyer**
**17, allée des Eiders**
**F-75019 Paris (FR)**

(74) Mandataire : **Moinat, François et al**
**S.N.E.C.M.A. Service des Brevets Boîte Postale 81**
**F-91003 Evry Cédex (FR)**

## Description

L'invention a pour objets un procédé d'application par électrolyse d'un revêtement d'argent en couche mince d'épaisseur comprise entre 0,8 et 1,8 microns sur des pièces en acier inoxydable du type "acier à roulement" comme par exemple Z100 CD 17 ou E80CDV40 (Norme AFNOR), c'est à dire des aciers d'une dureté supérieure à 58 sur l'échelle des duretés Rockwell très peu déformables.

Dans des domaines comme l'argentage d'articles d'orfèvrerie, il est connu d'effectuer un argentage en couche épaisse précédé d'un nickelage. Le document FR-A 1442506 décrit un procédé de ce type. Les conditions décrites de mise en oeuvre de ce procédé ne sont pas adaptées aux substrats qui intéressent la présente invention. En effet elles prévoient un prénickelage à température de 40° à 60°, température à laquelle les aciers à roulement, très sensibles aux températures élevées en milieu chlorhydrique, verraient leurs carbures dissous. En outre la mise en oeuvre des étapes d'argentage prévoit un préargentage dans des conditions telles que l'épaisseur de la couche de préargentage aura une tolérance de 1 à 5 microns tandis que la couche d'argentage sera de 30 μm.

Un tel procédé n'est absolument pas adapté au problème que l'invention tend à résoudre, à savoir réaliser une couche d'argent très adhérent sur un acier à roulement, couche dont l'épaisseur maximale doit être constante et reproductible et ne doit pas dépasser 1,8 μm .

Dans certaines applications des roulements à billes ou à rouleaux, on a besoin que ces roulements soient lubrifiés à vie et ne fassent pas appel à des lubrifiants externes tels que des huiles ou les graisses, soit que des contraintes d'encombrement empêchent l'installation de moyens de graissage, soit que l'environnement ne permette pas l'utilisation de graisses ou d'huiles de lubrification en raison de risques de contamination du lubrifiant par l'environnement ou de dangers que le lubrifiant pourrait créer (utilisation de roulements dans des atmosphères où un lubrifiant échauffé pourrait causer une inflammation ou une explosion)

Dans ces applications, on est amené à supprimer les lubrifiants externes et à doter les chemins de roulement des paliers ou des roulements à billes de couches de revêtement à très faible coefficient de frottement comme par exemple des revêtements comportant du graphite ou du bisulfure de molybdène.

On a toutefois constaté que ces derniers revêtements, s'ils étaient disposés directement sur les aciers à roulement, n'avaient pas une durée de vie importante en raison de la très faible adhérence qu'ils ont sur lesdits aciers. On a constaté également que cette adhérence pouvait être améliorée si le support subissait un argentage préalable au dépôt du revêtement lubrifiant.

C'est ainsi qu'une gamme classique d'argentage avant dépôt de revêtement lubrifiant comporte les étapes suivantes :
- dégraissage des pièces dans un bain de solvant ;
- dégraissage électrolytique anodique en milieu alcalin ;
- attaque électrolytique en milieu acide ;
- neutralisation chimique dans un bain de carbonate de sodium ;
- argentage dans un bain électrolytique de cyanure d'argent (1,2g/l), cyanure de potassium (37,5g/l), carbonate de sodium (22,5g/l) et soude (37,5g/l) pendant une min. à température ambiante sous une densité de courant comprise entre 5 et 10 A/dm2 ;
- rinçage ;
- séchage à l'air ;
- dégazage à l'air à 130° pendant 2 heures.

On a néanmoins constaté que des roulements à billes ayant subi un tel traitement avant revêtement lubrifiant, s'ils étaient soumis à de fortes contraintes telles qu'une variation importante et rapide de la vitesse de rotation ou encore qu'un échauffement subit, se grippaient très vite et entrainaient la détérioration du dispositif les comportant. Des analyses effectuées sur de tels roulements grippés ont mis en évidence divers types de problèmes.

On s'est d'abord rendu compte que le procédé d'argentage tel que décrit ci-dessus ne permet pas l'obtention d'une épaisseur d'argent suffisamment importante.

En effet, l'électrolyse sous une forte densité de courant (d.d.c. supérieure à 5A/dm2) avec la composition du bain d'argentage évoquée ci-dessus amène à une polarisation cathodique (due aux ions sodium à haute d.d.c.) qui devient rapidement importante et bloque le mécanisme de déposition électrolytique d'argent à une épaisseur qui ne dépasse pas 0,5μm .

Il a été également constaté, pendant l'argentage, un fort dégagement gazeux qui crée des risques de fragilisation du substrat acier par l'hydrogène, risques d'autant plus importants que l'épaisseur d'argent limitée à 0,5 μ m ne crée pas une barrière suffisante pour éviter la diffusion de l'hydrogène dans le substrat.

D'autre part, le dégazage à l'air à 150°c de dépots d'argent de 0,5 μ m conduit à une adhérence douteuse de l'argent sur le substrat, ce que prouvent des analyses sous faible grossissement montrant une oxydation du dépôt d'argent et ponctuellement de la sous-couche provoquant la perte d'adhérence.

Le document Chemical Abstract "Treatment of a Stainless steel strip before plating" de Furukawa Electric Co, (Vol 102 - 1985 - 211 592g), prévoir quant à lui de réaliser un dépôt d'argent d'une épaisseur de 1 µm sur des feuilles d'acier inoxydable ferritique en réalisant un nickelage en milieu chlorhydrique suivi d'un préargentage sous 3 A/dm2 pendant 10 secondes et d'un argentage sous 0,5 A/dm2 pendant 3 minutes. Un tel processus n'est pas facilement utilisable de façon industrielle car le but de la présente invention est de réaliser une couche d'épaisseur très faible (inférieure à 1,8µ m ) et reproductible. Or une durée de préargentage de 10s est difficile à reproduire industriellement de façon régulière et sur une durée aussi courte, la moindre variation de durée entraîne une variation importante de l'épaisseur du préargentage en raison de la forte d. d. c. utilisée. En outre, avec une telle d. d. c., la sous-couche d'argent sera grossière et ne peut amener qu'à un mauvais résultat final de l'argentage.

L'invention a donc pour but de réaliser une gamme industrielle d'argentage,dont le maîtrise des paramètres au cours des différentes étapes évite ces inconvénients et permette de réaliser des dépôts d'argent d'épaisseur reproductible et comprise entre 0,8 et 1,8 µm.

L'invention a également pour but de réaliser une gamme d'argentage telle que l'épaisseur du dépôt d'argent soit constante sur la totalité de la surface à recouvrir.

Un autre but de l'invention est de réaliser un dépôt d'argent à la fois très adhérent et n'entrainant ni fragilisation par l'hydrogène ni perte de ductilité de la pièce ainsi revêtue.

Enfin l'invention a pour but de réaliser, sur des chemins de roulement de paliers à billes ou à rouleaux, un dépôt adhérent et durable de matériaux anti-friction tels que du bisulfure de molybdène ou du graphite après argentage préalable du chemin de roulement selon le procédé de l'invention.

L'invention à donc pour objet un procédé d'application par électrolyse d'un revêtement d'argent en couche mince d'épaisseur comprise entre O,8 et 1,8 µm sur des pièces en acier inoxydable de dureté supérieure à 58 sur l'échelle des duretés Rockwell, et à faible aptitude à la déformation.

Ce procédé comporte les étapes successives suivantes :

a) dégraissage des pièces dans un bain de solvant tel que le trichloréthane ;

b) dégraissage électrolytique anodique en milieu alcalin;

c) attaque électrolytique anodique en milieu acide ;

d) étape intermédiaire de préparation complémentaire ;

e) neutralisation électrolytique ;

f) argentage électrolytique ;

Ladite étape d'argentage étant séparée en deux opérations successives distinctes, la première f1, de ces opérations consistant en un préargentage électrolytique dans un bain comportant :

– du cyanure d'argent Ag CN

– du cyanure de potassium KCN

dans des proportions telles que le rapport KCN libre/Ag métal soit supérieur à 15, et en ce que la deuxième opération, f2, d'argentage proprement dit est effectuée dans un second bain comportant en proportions différentes, outre les trois composés du bain de préargentage, de la potasse, en proportions telles que le rapport KCN libre/Ag métal du bain d'argentage soit environ 10 fois plus faible que celui du bain de préargentage.

Selon l'invention, le bain d'argentage électrolytique comporte du carbonate de potassium.

Les bains de préargentage (opération f1) et d'argentage (f2) ont les compositions suivantes :

|  | ! Préargentage (f1) ! | Argentage(f2) |
|---|---|---|
| Cyanure d'argent Ag CN ! | 3 à 3,5g/l | !40 à 75g/l |
| Cyanure de potassium KCN! | | ! |
| libre! | 60 à 80 g/l | !50 à 90g/l |
| Carbonate de potassium ! | | ! |
| $K_2CO_3$ ! | 10g/l* | ! 10g/l* |
| Potasse KOH ! | — | ! 10g/l |
| KCN libre/ Ag métal | $\geqslant$ 15 | 1,5environ |

\* ces valeurs pour le carbonate de potassium sont des valeurs minimales.

D'autres caractéristiques de ces opérations seront précisées ci-après.

Le procédé selon l'invention comporte également d'autres étapes de rinçage et de séchage ainsi qu'une étape importante de dégazage sous atmosphère neutre permettant d'éviter les risques de fragilisation par l'hydrogène.

L'invention a également pour objet l'application du procédé à l'amélioration de la tenue en frottement de roulements à billes ou à rouleaux, selon laquelle les chemins de roulement des bagues intérieures et extérieures desdits roulements à billes ou à rouleaux sont soumises à un argentage selon les modalités ici décrites, lesdits chemins de roulement pouvant recevoir, après argentage, une couche adhérente, d'un matériau lubrifiant tel que par exemple du bisulfure de molybdène ou du graphite.

D'autres caractéristiques de l'inventon seront précisées dans le complément de description ci-dessous accompagné de planches de dessins parmi lesquelles ;

– la figure 1 représente un montage cathodique pour l'argentage électrolytique de bagues intérieures de roulements à billes ;

– la figure 2 représente un montage cathodique pour l'argentage électrolytique de bagues extérieures de roulements à billes.

L'invention sera décrite à l'aide d'un exemple de réalisation dans lequel les pièces à recouvrir étaient soit des bagues intérieures et extérieures de roulements à billes soit des éprouvettes cylindriques de diamètre 20mm et d'épaisseur 10mm en acier à haute résistance Z100CD17 (Norme AFNOR).

Dans le cas des bagues de roulement, deux types de montage ont été utilisés suivant que l'on avait affaire à des bagues intérieures ou des bagues extérieures.

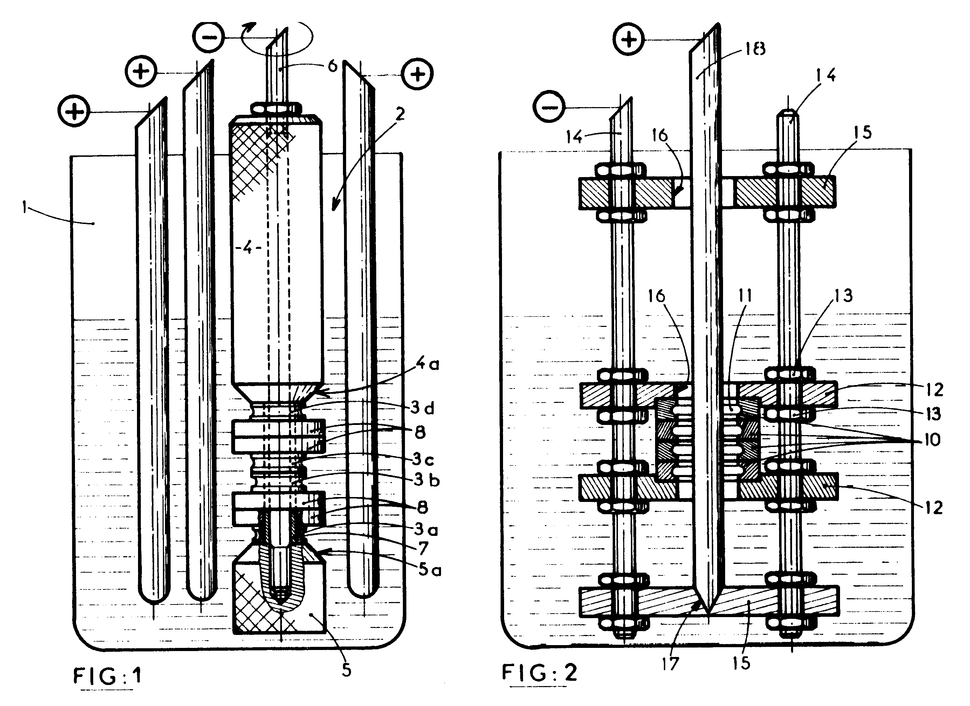

La figure 1 montre un montage utilisé pour des bagues intérieures. Dans une cuve à électrolyse 1, le montage cathodique 2 de quatre bagues à revêtir, de surface unitaire égale à 6,25 cm2, est effectué par empilage de ces bagues 3a, 3b, 3c, 3d entre deux éléments cylindriques non conducteurs par exemples en chlorure de polyvinyle (PCV) 4 et 5 serrés par un écrou vissé sur une tige filetée 6 conductrice centrale reliée à une source de courant cathodique. Sur la hauteur des bagues à revêtir une entretoise 7 conductrice en acier Z 10 CNT 18 (Norme AFNOR) est disposée entre la cathode 6 et l'alésage des bagues de roulement. Les éléments cylindriques non conducteurs 4 et 5 ont été chanfreinés respectivement en 4a, 5a au niveau du contact avec les pièces à revêtir afin d'éviter à cet endroit une accumulation de gaz néfaste à l'adhérence du revêtement sur la zone de la baguer voisine de l'élément non conducteur 4 ou 5. En outre des bagues intermédiaires 8 en un matériau identique de celui des bagues à revêtir 3 à 3b ont été alternées avec ces dernières de façon à servir de "voleur de courant" aptes à éviter des surépaisseurs de dépôts éventuelles. De bons résultats ont été obtenus avec trois anodes régulièrement réparties à 120° autour d'un montage cathodique central tournant.

En ce qui concerne les bagues extérieures 10 montrées à la figure 2 dont les bandes de roulement internes 11 devaient être argentées, les essais ont été faits avec quatre bagues 10 de surface unitaire égale à 10cm2 serrées côte à côte entre deux anneaux 12 métalliques conducteurs en Z10CNT18 maintenus vissés par des écrous 13 sur des tiges filetées 14 conductrices dont au moins une est reliée à une source de courant cathodique. Les meilleurs résultats ont été obtenus avec quatre cathodes régulièrement réparties. Deux anneaux supplémentaires 15 en plexiglas permettent de conserver l'écartement des tiges 14. Les anneaux 12 et l'anneau supérieur 15 comportant un alésage central 16 tandis que l'anneau 15 inférieur comporte un cone de centrage 17 pour l'anode 18 qui est introduite dans l'alésage 16. L'ensemble de ce montage peut être disposé tournant dans la cuve à électrolyse.

La gamme d'argentage au moyen des dispositifs indiqués ci-dessus a donc été la suivante :

– les pièces subissent :

a) un premier dégraissage dans un bain de solvant tel que le trichloréthane,

puis :

b) un second dégraissage électrolytique anodique pendant une minute à température ambiante avec une cathode en acier inoxydable Z1OCNt18 (Norme AFNOR) dans un bain comportant la composition suivante :

| | |
|---|---|
| . Soude (Na OH) | 37,5g/l |
| . Carbonate de sodium ($Na_2CO_3$) | 22,5g/l |
| . Cyanure de sodium (Na CN) | 37,5g/l |

sous une densité de courant (d.d.c) de 5 A/dm2 ce qui correspondait pour les bagues extérieures à une intensité de 1,25 ± 0,2A et pour les bagues intérieures à 2 ± 0,2A.

– les pièces sont ensuite soumises à un rinçage abondant à l'eau courante.

c) On réalise ensuite une attaque électrolytique anodique dans un bain acide comportant :

| | | |
|---|---|---|
| . Acide phosphorique ($H_3PO_4$,d=1,70) | : | 986 g/l |
| . Acide sulfurique ($H_2SO_4$,d=1,84) | : | 458 g/l |
| . $H_2O$ | : | 60 g/l |
| . Glycérol | : | 138 g/l |

pendant 10 secondes à température ambiante avec une cathode de plomb et sous une d.d.c de 5A/dm2 soit 1,25 ± 0,1A (bagues extérieures) et 2 ± 0,1A (bagues intérieures), cette attaque étant suivie d'un rinçage abondant à l'eau courante.

– d) Après ces nettoyages, on effectue sur les pièces une étape intermédiaire de préparation complémentaire qui consiste en un prénickelage, dit de Wood, afin de réaliser un dépôt très fin de nickel actif et adhérent, tout en permettant une dépassivation de la surface métallique sur laquelle on vient déposer le nickel; ce prénickelage est effectué dans un bain contentant :

. Chlorure de nickel ($NiCl_2,6H_2O$) : 240 g/l
. Acide chlorhydrique (HCl,d = 1,16): 36 g/l

pendant 4 minutes à température ambiante sous une d.d.c. comprise entre 6 et 8 A/dm2 et préférentiellement, de 7 A/dm2, soit respectivement 1,75 ± 0,1 A et 2,8 ± 0,1 A pour les bagues extérieures et intérieures.

– e) Les pièces subissent ensuite une étape de neutralisation électrolytique à base de potasse-cyanure afin d'activer la surface et d'assurer un milieu compatible avec le bain d'argentage ultérieur. Dans les procédés antérieurs utilisant une neutralisation chimique l'activation de surface est aléatoire.A l'inverse selon l'invention l'activation est régulière et concourt à l'obtention d'une adhérence maximale de l'argent déposé ultérieurement, ceci étant dû à l'action mécanique de l'effervescence en surface produite au cours du processus électrolytique. Cette neutralisation est effectuée à température ambiante pendant 30 secondes sous une d.d.c de 1A/dm2 soit sous des intensités comprises entre 0,25 et 0,30 A, pour les bagues extérieures (respectivement 0,40 et 0,45 A pour les bagues intérieures) dans un bain comprenant :

. Cyanure de potassium (KCN) : 40g/l
. Carbonate de potassium $K_2CO_3$ : 10g/l

La neutralisation est également suivie d'un rinçage à l'eau courante.

– f) Les pièces ainsi préparées peuvent alors subir le traitement d'argentage proprement dit que l'on effectue selon l'invention en deux opérations successives faites sans rinçage intermédiaire des pièces.

La première opération -f1- est effectuée à température ambiante pendant 30 secondes ± 2 secondes sous une densité de courant de 1A/dm2 i.e.avec une intensité comprise entre 0,25 et 0,30A pour les bagues extérieures (resp. 0,40 et 0,45 pour les bagues intérieures) dans un bain constitué de :

. Cyanure d'argent (Ag CN) : 3g/l
. Cyanure de potassium (KCN) : 75g/l
. Carbonate de potassium ($K_2CO_3$): 10g/l

Cette opération est effectuée sous agitation mécanique du bain et avec introduction dans le bain de préargentage des pièces déjà mises sous tension cathodique, pour éviter tout déplacement chimique du dépôt d'argent qui, sans cela, serait peu adhérent.

Immédiatement après, on soumet les pièces à la deuxième opération -f2- d'argentage dans un bain similaire contenant en outre de la potasse dans les proportions suivantes :

. AgCN : 50 g/l
. KCN : 84 g/l
. $K_2CO_3$ : 10 g/l
. KOH : 10 g/l

Cette opération s'effectue à une température comprise entre 33 et 37°C sous une d.d.c de 1A/dm2 soit 0,25 à 0,30A (resp. 0,40 à 0,45 A), pendant une durée de 50 secondes (respectivement 90 secondes), ± 2 secondes.

Les teneurs des bains en leurs différents composants sont calculées de telle façon que le rapport KCN libre/Ag métal de l'opération f1) de préargentage soit supérieure à 15 et que le même rapport pour l'opération f2) d'argentage soit environ 10 fois plus faible. La combinaison des deux opérations successives et de cette condition, imposée par l'invention, est la conséquence d'un certain nombre d'expérimentations ayant montré qu'ainsi on évite le déplacement de particules d'argent chimique non adhérentes au moment de l'introduction des pièces dans le bain, et qu'au contraire, on réalise un dépôt exclusivement électrolytique d'argent métal très adhérent à la surface préalablement nickelée ainsi qu'il a été vu plus haut.

La gamme d'argentage selon l'invention est poursuivie par les opérations suivantes :
– g) rinçage des pièces à l'eau courante ;
– h) rinçage des pièces à l'éthanol ;
– i) séchage à l'air comprimé ;
– j) dégazage sous atmosphère neutre (balayage d'argon) pendant 10 à 15 heures à une température comprise entre 147°C et 153°C.

La qualité d'adhérence des revêtements effectués selon l'invention a été vérifiée par des tests comparatifs d'arrachage au ruban adhésif, ces tests étant réalisés par comparaison avec l'état de la technique indiqué dans le préambule de la présente demande. Ces tests résumés au tableau 1 ci-après, montrent que par rapport à la gamme antérieure et à certains perfectionnements de cette gamme antérieure, inefficaces, seule la gamme selon l'invention permet un dépôt adhérent de la couche d'argent.

Des tests comparatifs ont également été faits concernant la variation de masse, l'épaisseur et l'adhérence après dégazage.

Les tests ont porté sur l'influence des bains d'argentage, du bain de prénickelage et de l'attaque anodique électrolytique vis à vis des épaisseurs de dépôts et de leur adhérence avant et après dégazage à 150°C.

Le tableau N° 2 mentionne les résultats obtenus, ils montrent que :
– la perte de matière lors de l'attaque électrolytique n'est pas négligeable, elle est de 6mg pour une durée de 10s.
– La masse de nickel déposée sous une densité de courant de 7 A/dm2 pendant 4mn est de 6 mg en moyenne soit une épaisseur de 0,38 µm.
– Le bain d'argent employé dans l'état de la technique antérieure ne permet pas l'obtention de l'épaisseur d'argent requise, en effet les épaisseurs mesurées sont de 0,2 µm sous 5 A/dm2, 0,5 µm sous 3 A/dm2, 0,1 micron sous 1 A d/m2. Ces valeurs sont indépendantes de la durée de l'électrolyse car elles restent identiques après 1,5 mn d'essai.

Il est ainsi observé pendant l'argentage selon l'état de la technique, un fort dégagement gazeux pouvant être dommageable en augmentant le risque de fragilisation par l'hydrogène. L'examen de la composition des bains d'argentage selon l'état de la technique indique que la polarisation cathodique, provoquée par les ions sodium à haute densité de courant, devient rapidement importante et bloque le mécanisme de déposition.

– Les bains f1 et f2 de préargentage et d'argentage selon l'invention quant à eux donnent des valeurs satisfaisantes et la plage de durée d'électrolyse à retenir se situe entre 50 s et 1 mn30.
– Les épaisseurs calculées à partir des variations de masse des échantillons ont été vérifiées sur quelques bagues de roulement et une bonne corrélation a été trouvée.
– La vérification de l'adhérence des dépôts d'argent avant et après dégazage à 150°C pendant 15 heures a permis une observation très importante ; si après dépôt, l'adhérence est toujours bonne avec la gamme selon l'invention le dégazage à 150°C à l'air des dépôts d'argent d'épaisseur 0,5 micron environ conduit à une adhérence douteuse. Un examen sous faible grossissement montre une oxydation du dépôt d'argent et ponctuellement de la sous couche ce qui provoque la perte d'adhérence. Par contre, si le dégazage est réalisé sous un balayage d'argon, le dépôt d'argent reste très adhérent et exempt de point d'oxydation. De ce fait, sur pièces, le dégazage sous argon a été appliqué selon l'invention systématiquement dès vérification de ces résultats antérieurs.

Des tests comparatifs sur la fragilisation par l'hydrogène sont résumés dans le tableau 3.

Les essais ont été exécutés afin d'évaluer l'influence des diverses étapes de la gamme d'une part après dépôt et d'autre part après dégazage. Les éprouvettes sont rompues en flexion, à l'état tel, $(\alpha 0)$ ce qui correspond à la base 100 puis après dépot$(\alpha 1)$ et dégazage $(\alpha 2)$ ; le rapport $\dfrac{\alpha 1}{\alpha 0}$ ou $\dfrac{\alpha 2}{\alpha 0}$ , indice de fragilisation du matériau indique alors sa perte de ductilité. Sur l'acier à roulement Z100CD17 les valeurs égales ou supérieures à 94 % sont considérées comme non fragilisantes.

La gamme selon l'état de la technique antérieure, appliquée telle que, est assez fragilisante (perte de ductilité 35%) et le dégazage de 2 h à 130°C à l'air est insuffisant ; même après un maintien de 15 h à 150°C la valeur de 90% est en dessous de la limite acceptable.

Le prénickelage n'a aucune influence sur le chargement en H2 ; ce point est intéressant car sur des aciers à haute résistance tels que 40CDV20, 35NCD16, une fragilisation par l'hydrogène est relevée.

Les bains cyanurés (neutralisation, préargentage, argentage) sont fragilisants mais à un degré moindre que le bain d'argent antérieur et un dégazage de 12 h à 15h sous argon ou sous air assure un retour à la ductilité initiale.

L'emploi de l'attaque électrolytique dans la gamme, favorable à une bonne adhérence du dépôt, n'assure, après dégazage, qu'une restauration de la ductilité du substrat de 96 % alors que celle-ci remonte à 100 % quand cette attaque n'est pas pratiquée. Cette légère altération de la ductilité n'est pas imputable à une fragilisation par l'hydrogène mais à une sensible dégradation de la qualité microgéométrique de la surface du substrat en Z100CD17 ; en effet, les divers examens de surface pratiqués montrent que l'attaque électrolytique (anodique) est à l'origine de microcavités superficielles résultant de l'élimination des particules de carbures effleurant la surface (déchaussement).

Ces résultats montrent que l'invention s'applique avec succès à des aciers à roulement sur lesquels il permet ensuite d'appliquer une couche très adhérente d'un matériau lubrifiant tel que par exemple du graphite ou du bisulfure de molybdène.

## ADHERENCE DE REVETEMENTS APPLIQUES SUR ACIER A ROULEMENT EN Z100CD17

| TEST NUMERO | GAMMES | ADHERENCE AU RUBAN ADHESIF |
|---|---|---|
| 1 | Etat de la technique antérieur : Dégraissage anodique 1 mn, attaque électro 10s, 5 A/dm3 neutralisation chimique au carbonate de sodium. Argentage 1 mn,5 A/dm2 en une seule étape | Mauvaise ; arrachement du dépôt d'argent |
| 2 | Même gamme mais remplacement neutralisation chimique par neutralisation électrolytique potasse cyanure 30s, 2 A/dm2. | Insuffisante; arrachement partiel du dépôt d'argent. |
| 3 | Même gamme que 2, mais remplacement de l'opération unique d'argentage par les opérations ; f1 – préargentage 30s 2 A/dm2 ) selon l'invention f2 – Argentage 1 mn 1 A/dm2 ( | Insuffisante,arrachement partiel du dépôt d'argent. |
| 4 | Même gamme que 2 mais addition prénickelage de Wood 4 mn,7 A/dm2, avant argentage selon art antérieur. | Convenable; pas d'enlèvement d'argent. |
| 5 | Même gamme que 3 mais addition prénickelage de Wood 4 mn à 7 A/dm2 avant préargentage f1, argentage f2 selon l'invention. | Bonne, aucun enlèvement d'argent. |

EP 0 315 523 B1

Tableau 1

EP 0 315 523 B1

## ADHERENCE ET VARIATION DE MASSE DE REVETEMENTS APPLIQUES SUR ACIER
## A ROULEMENT EN Z100CD17

| Conditions d'emploi des bains | | Variation masse | Epaisseur $\mu m$ | ADHERENCE | | |
|---|---|---|---|---|---|---|
| | | | | Après dépôt | Après dégazage | |
| | | | | | 15h 150° C air | 15h 150°C sous argon |
| Prénickelage 7 A/dm2, 4mn | | 5 à 7 mg 6mg (5valeurs/9) | 0,32-0,44 0,38 | . | | |
| Dégraissage anodique 5 A/dm2, 1mn+attaque élec-trolytique 5 A/dm2, 10 s. | | − 6mg | | | | |
| Argentage dans le bain se-lon l'état | 5 A/dm2 1mn | 4 | 0,2 | bonne | | |
| | 5 A/dm2 3mn | 3 | 0,17 | " | | |
| | 5 A/dm2 5mn | 3 | 0,17 | " | | |
| de la technique antérieure | 3 A/dm2 2mn | 9 | 0,5 | bonne | Limite | Convenable |
| | 3 A/dm2 5mn | 9 | 0,5 | " | | |
| | 1 A/dm2 2mn | 2 | 0,1 | " | Insuffisante | |
| Préargentag selon l'in-vention. | 1 A/dm2 30s | 7 | 0,42 | bonne | limite | |
| Argentage selon l'in-vention | 1 A/dm2 1mn30 | 28 | 1,36 | bonne | bonne | bonne |

NOTA : Les dépôts d'argent ont été appliqués après prénickelage.

Tableau 2

FRAGILISATION PAR L'HYDROGENE DE L'ACIER A ROULEMENT Z 100CD17 REVETU DE DIVERS DEPOTS

EP 0 315 523 B1

Tableau 3

| GAMME | VALEUR DE DUCTILITE EN % | |
|---|---|---|
| | Après dépôt $\alpha_1 / \alpha_0$ | Après dégazage $\alpha_2 / \alpha_0$ |
| Gamme selon technique antérieure | 65 | 90 : 15 h à 150°C air |
| Gamme selon technique antérieure | 65 | 83 : 2 h à 130°C air |
| Dégraissage anodique + nickelage de Wood 4mn, 7 A/dm2 é ≈ 0,4 μm | 100 - 100 | |
| Dégraissage anodique + attaque électrolytique 5 A:dm2, 10s + nickelage de wood é ≈ 0,4 | 92 | 96 : 15 h à 150°C air |
| Dégraissage anodique + nickelage de wood + neutralisation électrolytique 30s, 1 A/dm2 | 92 - 95 | |
| Dégraissage anodique + nickelage de wood + neutralisation + préargentage 30s, 1 A/dm2 + argentage 1mn30, 1 A/dm2 | 83 | 100 : 15 h à 150°C air |
| Dégraissage anodique + attaque électro + nickelage de wood + neutralisation + préargentage 30s, 1 A/dm2 | 71 - 77 | 96: 12h à 150°C sous argon<br>96: 23h à 150°C air |
| idem ci-dessus + argentage 1mn30, 1A/dm2 | 72 - 70 - 76 - 72 | 96: 12h à 150°C sous argon<br>94: 15h à 150°C sous argon<br>95: 23h à 150°C air |

EP 0 315 523 B1

## Revendications

1. Procédé d'application par électrolyse d'un revêtement d'argent en couche mince d'épaisseur comprise entre 0,8 et 1,8 ($\mu$m) microns sur des pièces en acier inoxydable de dureté supérieure ou égale à 58 sur l'échelle des duretés Rockwell, et à faible aptitude à la déformation comportant les étapes successives suivantes :
    a) dégraissage des pièces dans un bain de solvant tel que le trichloréthane ;
    b) dégraissage électrolytique anodique en milieu alcalin
    c) attaque électrolytique anodique en milieu acide ;
    d) étape intermédiaire de préparation complémentaire ;
    e) neutralisation électrolytique ;
    f) argentage électrolytique ;
    g) rinçage de la pièce à l'eau courante ;
    h) rinçage de la pièce à l'éthanol ;
    i) séchage de la pièce à l'air comprimé ;
ladite étape f d'argentage étant séparée en deux opérations successives distinctes, la première, f1, de ces opérations consistant en un préargentage électrolytique dans un bain comportant
    − du cyanure d'argent AgCN
    − du cyanure de potassium KCN
dans des proportions telles que le rapport KCN libre/ Ag métal soit supérieure à 15, et en ce que la deuxième opération f2 d'argentage proprement dit est effectuée dans un second bain comportant en proportions différentes, outre les trois composés du bain de préargentage, de la potasse, en proportions telles que le rapport KCN libre /Ag métal du bain d'argentage soit environ 10 fois plus faible que celui du bain de préargentage caractérisé en ce que, le bain d'argentage électrolytique de l'étape f1 comporte du carbonate de potassium $K_2CO_3$, et en ce que, l'étape d de préparation complémentaire est une étape de prénickelage de Wood dans un bain comportant du chlorure de nickel et de l'acide chlorhydrique effectuée à température ambiante sous une densité de courant comprise entre 6 et 8 A/dm2. et en ce que, il comporte en outre une étape j) de dégazage sous atmosphère neutre pendant 10h à 15h à une température comprise entre 147°C et 153°C.

2. Procédé selon la revendication 1 caractérisé en ce que l'étape e) de neutralisation est effectuée par électrolyse de la pièce à température ambiante dans un bain de cyanure de potassium KCN et de carbonate de potassium sous faible densité de courant.

3. Procédé selon l'une quelconque des revendications 1 ou 2 caractérisé en ce que l'opération f1 de préargentage est effectuée dans un bain comportant de 3 à 3,5 g/l AgCN ; de 60 à 80 g/l KCN libre ; au moins 10 g/l $K_2O_3$ à température ambiante sous une densité de courant de 1 + 0,2 A/dm2 pendant 30 ± 2 secondes, cette opération étant effectuée sous agitation mécanique du bain et avec introduction dans le bain de la pièce déjà mise sous tension cathodique.

4. Procédé selon l'une quelconque des revendications 1 à 3 caractérisé en ce que l'opération f2 d'argentage est effectuée dans un bain comportant 40 à 75g/l AgCN ; 50 à 90g/l KCN libre ; au moins 10 g/l $K_2CO_3$ et 5à 10 g/l KOH à une température de 35° ±2°C sous une densité de courant comprise entre 1 et 1,2 A/dm2 pendant une durée de 50 à 90 secondes ± 2 secondes, en fonction de la forme géométrique de la pièce à argenter.

5) Application du procédé à l'amélioration de la tenue en frottement de roulements à billes ou à rouleaux, caractérisée en ce que les chemins de roulement des bagues intérieures et extérieures desdits roulements à billes ou à rouleaux sont soumises à un argentage au moyen du procédé selon l'une quelconque des revendications 1 à 5 et en ce que lesdits chemins de roulement reçoivent, après argentage, une couche adhérente, d'un matériau lubrifiant tel que par exemple du bisulfure de molybdène ou du graphite.

## Claims

1. Process for the application by electrolysis of a thin coat of silver of a thickness between 0.8 and 1.8 microns ($\mu$m) on to parts in stainless steel of a hardness equal to or above 58 on the Rockwell hardness scale, and of low deformability, comprising the following successive steps:
    a) degreasing of the parts in a bath of solvent such as trichlorethane;
    b) anodic electrolytic degreasing in alkaline medium;
    c) anodic electrolytic pickling in acid medium;
    d) intermediate stage of additional preparation;

11

e) electrolytic neutralisation;

f) electrolytic silver plating;

g) rinsing the part under running water;

h) rinsing the part in ethanol;

i) drying the part with compressed air;

the said silver plating step f) being separated into two distinct successive operations, the first of these operations f1) consisting of an electrolytic pre-plating with silver in a bath comprising

– silver cyanide AgCN

– potassium cyanide KCN

in proportions such that the ratio free KCN/metallic Ag shall be above 15, and in that the second operation f2), of the full silver plating itself is carried out in a second bath comprising in different proportions, in addition to the three compounds of the pre-plating bath, potassium in proportions such that the ratio of free KCN/ metallic Ag in the silver plating bath shall be about 10 times lower than in the pre-silver plating bath characterised in that, the electrolytic pre-plating bath of the step f1) comprises potassium carbonate $K_2CO_3$, and in that, the additional preparatory step d) is a Wood nickel pre-plating process in a bath containing nickel chloride and hydrochloric acid carried out at ambient temperature with a current density of between 6 and 8 A/dm2. and in that, it comprises in addition a step j) of degasification in neutral atmosphere for 10 to 15h at a temperature between 147° and 153°C.

2. Process in accordance with Claim 1, characterised in that the neutralising step e) is carried out by electrolysis of the part at ambient temperature in a bath of potassium cyanide KCN and potassium carbonate at low amperage.

3. Process in accordance with either of Claims 1 or 2, characterised in that the silver preplating operation f1) is carried out in a bath comprising 3 to 3.5g/l of AgCN; from 60 to 80g/l of free KCN; at least 10g/l of $K_2CO_3$ at ambient temperature under a current density of 1 + 0.2A/dm2 during 30 ± 2 seconds, this operation being carried out with mechanical stirring of the bath and with the introduction into it of the part already subjected to a cathodic voltage.

4. Process in accordance with any of Claims 1 to 3, characterised in that the silver plating operation f2) is carried out in a bath comprising 40 to 75g/l of AgCN; 50 to 90g/l of free KCN, at least 10g/l of $K_2CO_3$ and 5 to 10g/l of KOH at a temperature of 35° ± 2°C at a current density of between 1 and 1.2A/dm$^2$ during a period of from 50 to 90 ± 2seconds, as a function of the geometric shape of the part to be silver plated.

5. Application of the process to the improvement of the frictional behaviour of ball or roller bearings, characterised in that the inner and outer races of the said ball or roller bearings are subjected to an operation of silver plating by means of a process in accordance with any of Claims 1 to 5 and in that the said races receive, after silver plating, an adherent coating of a lubricating material such as, for example, molybdenum bisulphide or graphite.


## Patentansprüche

1. Elektrolytisches Verfahren zur Aufbringung einer dünnen Silberschicht mit einer Dicke zwischen 0,8 und 1,8 µm auf Teile aus rostfreiem Stahl mit einer Rockwell-Härte von 58 oder höher und niedriger Verformbarkeit, beinhaltend die nachstehenden aufeinanderfolgenden Stufen:

a) Entfetten der Teile in einem Lösungsmittelbad, z.B. aus Trichlorethylen,

b) anodisches elektrolytisches Entfetten in alkalischem Milieu,

c) anodische elektrolytische Behandlung in saurem Milieu,

d) Zwischenstufe mit einer Komplementärbehandlung,

e) elektrolytisches Neutralisieren,

f) elektrolytisches Versilbern,

g) Spülen des Teils mit strömendem Wasser,

h) Spülen des Teils mit Ethanol,

i) Trocknen des Teils mit Druckluft,

wobei die Stufe des Versilberns getrennt in zwei aufeinanderfolgenden Stufen erfolgt und die erste derselben, f1, aus einer elektrolytischen Vorversilberung in einem Bad besteht, das

– Silbercyanid (AgCN) und

– Kaliumcyanid (KCN),

in solchen Mengen enthält, daß das Verhältnis freies KCN/ metallisches Silber höher als 15 ist, sowie die zweite Versilberungsbehandlung, f2, in einem zweiten Bad mit unterschiedlichen Verhältnissen der drei Komponenten des Vorversilberungsbads, nämlich einem Verhältnis freies KCN/ metalisches Silber im Versilberungsbad, das um etwa das 10-fache geringer ist als das im Vorversilberungsbad, durchgeführt wird, dadurch **gekennzeichnet**, daß das elektrolytische Versilberungsbad der Stufe f1 Kaliumcarbonat $K_2CO_3$ enthält und daß die Stufe der Komplementärbehandlung eine Vorvernickelung nach Wood ist, die in einem Bad mit Nickelchlorid und Salzsäure bei Raumtemperatur und einer Stromdichte zwischen 6 und 8 A/dm$^2$ durchgeführt wird, und daß außerdem noch in einer Stufe j) eine Entgasung in neutralee Umgebung während 10 bis 15 Stunden bei einer Temperatur zwischen 147 °C und 153 °C erfolgt.

2. Verfahren gemäß Anspruch 1, dadurch gekennzeichnet , daß die Stufe e) zur Neutralisierung durchgeführt wird durch eine Electrolyse des Teils bei Raumtemperatur in einem Bad mit Kaliumcyanid KCN und Kaliumcarbonat bei niedrigen Stromdichte.

3. Verfahren nach Anspruch 1 oder 2, dadurch **gekennzeichnet,** daß die Vorversilberungsbehandlung f1 durchgeführt wird in einem Bad, das enthält: 3 bis 3,5 g/l AgCN, 60 bis 80 g/l freies KCN und mindestens 10 g/l$K_2CO_3$ bei Umgebungstemperatur und bei einer Stromdichte von 1 + 0,2 A/dm$^2$ während 30 ± 2 Sekunden, wobei während der Behandlung das Bad mechanisch bewegt wird sowie bei der Einbringung des Teils in das Bad dieses bereits unter kathodischer Spannung gehalten wird.

4. Verfahren gemäß einem der Ansprüche 1 bis 3, dadurch **gekennzeichnet,** daß die Versilberungsbehandlung f2 durchgeführt wird in einem Bad, das enthält: 40 bis 75 g/l AgCN, 50 bis 90 g/l freies KCN und mindestens 10 g/l $K_2CO_3$ sowie 5 bis 10 g/l KOH bei einer Temperatur von 35° ± 2 °C und einer Stromdichte zwischen 1 und 1,2 A/dm$^2$ während 50 bis 90 Sekunden ± 2 Sekunden in Abhängigkeit von der geometrischen Form des zu versilbernden Teils.

5. Anwendung des Verfahrens zur Verbesserung der Widerstandsfähigkeit gegen Wälzreibung von Kugel- und Walzenlagern, dadurch **gekennzeichnet,** daß die Bahnen der inneren und äußeren Ringe der Kugel- und Walzenlager einer Versilberung gemäß dem in einem der Ansprüche 1 bis 5 angeführten Verfahren unterworfen werden und daß die Bahnen nach der Versilberung noch einen haftenden Überzug aus einem Schmiermittel, wie Molybdändisulfid oder Graphit erhalten.

FIG:1

FIG:2

EP 0 315 523 B1